# EUROPEAN PATENT APPLICATION

(11) **EP 4 588 606 A1**
(43) Date of publication of application: **23.07.2025**
(21) Application number: 23952114.9
(22) Date of filing: 20.12.2023
(51) Int. Cl.: B23K 26/21, B23K 26/70, B23K 37/00

(54) **WELDING APPARATUS AND WELDING METHOD**

(30) Priority: 15.09.2023 CN 202311196142
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: CAI, Fuding, Ningde, Fujian 352100 (CN); WU, Ying, Ningde, Fujian 352100 (CN); WANG, Jun, Ningde, Fujian 352100 (CN); LI, Yingjun, Ningde, Fujian 352100 (CN); SONG, Genli, Ningde, Fujian 352100 (CN)
(74) Representative: Thoma, Michael
(86) International application number: PCT/CN2023/140385
(87) International publication number: WO 2025/055192

(57) **Abstract**

A welding device and a welding method are provided. The welding device includes: a welding component, configured to perform welding on a first welding region of a to-be-welded assembly at a first welding position, where the to-be-welded assembly includes multiple welding regions; and a measurement component, configured to measure a second welding position corresponding to a second welding region of the to-be-welded assembly under a condition that the welding component performs welding on the first welding region, where the second welding region is adjacent to the first welding region. The welding component is further configured to: move from the first welding position to the second welding position, and perform welding on the second welding region at the second welding position. Based on the welding device and the welding method, welding efficiency can be improved.

## Description

### CROSS-REFERENCE TO RELATED APPLICATIONS

This application claims priority to Chinese Patent Application No. 202311196142.5, filed on September 15, 2023 and entitled "WELDING DEVICE AND WELDING METHOD", which is incorporated herein by reference in its entirety.

### TECHNICAL FIELD

This application relates to the field of battery production and manufacturing, and more specifically, to a welding device and a welding method.

### BACKGROUND

With continuous advancement of battery technologies, various new energy industries in which batteries are used as energy storage devices have experienced rapid development. In development of battery technologies, multiple design factors need to be considered simultaneously, such as energy density, cycle life, discharge capacity, charge/discharge rate, and other performance parameters. In addition, processing efficiency of batteries needs to be considered. A battery includes multiple battery cells connected in series and/or parallel, and each battery cell has electrode terminals of different polarities. To achieve series-parallel connection among multiple battery cells, the electrode terminals need to be electrically connected to a busbar component through welding. How to improve welding efficiency for higher efficiency of processing batteries is a technical problem urgently requiring a solution.

### SUMMARY

Embodiments of this application provide a welding device and a welding method, to improve welding efficiency.

A first aspect provides a welding device. The welding device includes: a welding component, configured to perform welding on a first welding region of a to-be-welded assembly at a first welding position, where the to-be-welded assembly includes multiple welding regions; and a measurement component, configured to measure a second welding position corresponding to a second welding region of the to-be-welded assembly under a condition that the welding component performs welding on the first welding region, where the second welding region is adjacent to the first welding region. The welding component is further configured to: move from the first welding position to the second welding position, and perform welding on the second welding region at the second welding position.

Thus, for the welding device in this embodiment of this application, under the condition that the welding component performs welding on the first welding region of the to-be-welded assembly at a first welding position, the measurement component measures the second welding position corresponding to the second welding region, where the second welding region is a welding region adjacent to the first welding region among multiple welding regions included in the to-be-welded assembly; and the welding component moves from the first welding position to the second welding position and performs welding on the second welding region at the second welding position. By analogy, the welding device sequentially performs measurement and welding on the multiple welding regions. In this process, while the welding component performs welding on one welding region, the measurement component simultaneously measures a welding position of an adjacent welding region. This takes less time compared with time spent in a manner of performing measurement and welding on one welding region and then performing measurement and welding on a next welding region. According to this method, duration of the entire process of welding on the multiple welding regions is shortened, and thus welding efficiency is improved.

In some embodiments, the welding component and the measurement component move synchronously. Considering that the measurement component needs to measure the welding positions corresponding to the multiple welding regions at different positions, and the welding component needs to move to the welding positions corresponding to the multiple welding regions, under the condition that the welding component and the measurement component are set to move synchronously, the measurement component moves synchronously as the welding component moves from the first welding position to the second welding position. Therefore, separate control is not required. This simplifies a structure of the welding device, and improves efficiency.

In some embodiments, the welding device includes: a motion assembly, where the welding component and the measurement component are integrated into the motion assembly, and the motion assembly is configured to control movement of the welding component and the measurement component. The welding component and the measurement component are integrated into the motion assembly, allowing for controlling over movement of the welding component and the measurement component through the motion assembly. For example, through the motion assembly, the welding component and the measurement component can be controlled to move separately, or the welding component and the measurement component can be controlled to move synchronously. Moreover, integrating the welding component and the measurement component into the motion assembly simplifies the structure of the welding device, and reduces time for the welding component and the measurement component to avoid each other during movement. This facilitates control, and reduces manufacturing duration.

In some embodiments, the to-be-welded assembly includes the multiple welding regions arranged along a first direction, and the motion assembly is configured to control the welding component and the measurement component to move along the first direction, so as to sequentially perform welding on each welding region without excessive reciprocating motion or movement in other directions, resulting in short movement distances for both the welding component and the measurement component, thereby reducing the total welding duration of the to-be-welded assembly and improving welding efficiency.

In some embodiments, the motion assembly is configured to control the welding component and the measurement component to approach and/or move away from the to-be-welded assembly. The motion assembly can control the movement of the welding component and the measurement component in various directions. The operation is simple, thereby improving welding efficiency.

In some embodiments, each welding region among the multiple welding regions includes multiple welding subregions; and the welding component is configured to: simultaneously perform welding on the multiple welding subregions included in the first welding region at the first welding position, thereby reducing the total welding duration of the to-be-welded assembly and improving welding efficiency.

In some embodiments, the welding device further includes: a clamping plate assembly, where the clamping plate assembly is located on a side of the to-be-welded assembly facing the welding component and the measurement component, and the clamping plate assembly is configured to fix the multiple welding regions of the to-be-welded assembly, so that the multiple welding regions of the to-be-welded assembly are less prone to movement or misalignment during welding, improving measurement precision of the measurement component and welding precision of the welding component, and thereby improving the welding efficiency.

In some embodiments, the welding component and the measurement component are located on a side of the clamping plate assembly away from the to-be-welded assembly, so that the welding component, the measurement component, and clamping plate assembly can be easily moved and controlled during welding.

In some embodiments, the clamping plate assembly includes: a clamping plate, where the clamping plate is provided with multiple through holes, and the clamping plate is configured to fix the multiple through holes and the multiple welding regions, so that the welding component performs welding on the multiple welding regions through the multiple through holes; and a control component, configured to control the clamping plate to approach and/or move away from the to-be-welded assembly. This structure is simple, and can be easily implemented,

In some embodiments, the clamping plate assembly further includes: a dust collection component, where the dust collection component is configured to collect dust generated due to welding on the multiple welding regions, so as to reduce impact on welding caused by dust and other impurities generated during welding, improving welding efficiency and welding strength.

In some embodiments, the to-be-welded assembly includes a busbar component and multiple battery cells; the busbar component is configured to be electrically connected to electrode terminals of the multiple battery cells; and the multiple welding regions include a welding region between the busbar component and the electrode terminal. Thus, the welding device can weld the busbar component to the multiple electrode terminals, improving efficiency of welding between the busbar component and the electrode terminals, and thereby enhancing the processing efficiency of the battery cells.

In some embodiments, the to-be-welded assembly includes multiple battery cells arranged along the first direction; the multiple battery cells include two electrode terminals arranged along a second direction; the first direction is perpendicular to the second direction; and each welding region among the multiple welding regions includes a welding region between at least one electrode terminal of the battery cell and the busbar component. Each welding region may include a welding region between one or more electrode terminals of the battery cell and the busbar component. Electrode terminals of a same battery cell correspond to a same welding region, and then the multiple electrode terminals included in the same battery cell and the corresponding busbar component can be welded simultaneously with the welding component, thereby improving welding efficiency to improve efficiency of welding the multiple battery cells and the busbar component.

In some embodiments, the welding component includes a galvanometer laser welding machine. In this way, welding is fast, precise, and time-saving.

A second aspect provides a welding method. The welding method includes: performing welding on a first welding region of a to-be-welded assembly at a first welding position with a welding component, where the to-be-welded assembly includes multiple welding regions; measuring a second welding position corresponding to a second welding region of the to-be-welded assembly with a measurement component under a condition that the welding component performs welding on the first welding region, where the second welding region is adjacent to the first welding region; and moving the welding component from the first welding position to the second welding position, and performing welding on the second welding region at the second welding position.

Thus, according to the welding method in this embodiment of this application, under a condition that the welding component performs welding on the first welding region of the to-be-welded assembly at the first welding position, the measurement component measures the second welding position corresponding to the second welding region, where the second welding region is a welding region adjacent to the first welding region among multiple welding regions included in the to-be-welded assembly; and the welding component moves from the first welding position to the second welding position and performs welding on the second welding region at the second welding position. By analogy, the welding device sequentially performs measurement and welding on the multiple welding regions. In this process, while the welding component performs welding on one welding region, the measurement component simultaneously measures a welding position of an adjacent welding region. This takes less time compared with time spent in a manner of performing measurement and welding on one welding region and then performing measurement and welding on a next welding region. According to this method, duration of the entire process of welding on the multiple welding regions is shortened, and thus welding efficiency is improved.

In some embodiments, the welding component and the measurement component move synchronously.

In some embodiments, the method further includes: controlling the welding component and the measurement component to approach and/or move away from the to-be-welded assembly.

In some embodiments, each welding region among the multiple welding regions includes multiple welding subregions; and the performing welding on a first welding region at a first welding position with a welding component includes: performing welding simultaneously on the multiple welding subregions included in the first welding region at the first welding position with the welding component.

In some embodiments, the method further includes: fixing the multiple welding regions of the to-be-welded assembly with a clamping plate assembly, where the clamping plate assembly is located on a side of the to-be-welded assembly facing the welding component and the measurement component.

In some embodiments, the to-be-welded assembly includes a busbar component and multiple battery cells; the busbar component is configured to be electrically connected to electrode terminals of the multiple battery cells; and the multiple welding regions include a welding region between the busbar component and the electrode terminal.

In some embodiments, the to-be-welded assembly includes multiple battery cells arranged along a first direction, the multiple battery cells include two electrode terminals arranged along a second direction; the first direction is perpendicular to the second direction; and each welding region among the multiple welding regions includes a welding region between at least one electrode terminal of the battery cell and the busbar component.

### BRIEF DESCRIPTION OF DRAWINGS

FIG. 1 is a schematic block diagram of a welding device according to an embodiment of this application;
FIG. 2 is a schematic diagram of multiple welding regions according to an embodiment of this application;
FIG. 3 is a schematic diagram of a partial structure of a welding device according to an embodiment of this application;
FIG. 4 is a schematic structural diagram of a welding component and a measurement component according to an embodiment of this application;
FIG. 5 is a schematic structural diagram of an end portion of a welding component according to an embodiment of this application;
FIG. 6 is a schematic diagram of another partial structure of a welding device according to an embodiment of this application;
FIG. 7 is a schematic diagram of a partial structure of a clamping plate assembly according to an embodiment of this application;
FIG. 8 is a schematic structural diagram of a clamping plate according to an embodiment of this application;
FIG. 9 is a schematic structural diagram of multiple battery cells according to an embodiment of this application; and
FIG. 10 is a schematic flowchart of a welding method according to an embodiment of this application.

In the drawings, the drawings are not drawn to actual scale.

Reference signs: 1. welding device; 11. welding component; 111. air knife; 112. welding structure; 1121. welding position; 12. measurement component; 110. welding region; 120. welding subregion; 13. laser connection component; 10. motion assembly; 30. clamping plate assembly; 31. clamping plate; 311. through hole; 312. mounting structure; 313. blocking structure; 32. control component; 33. dust collection component; 40. bracket; 2. to-be-welded assembly; 21. battery cell; 211. electrode terminal; and 22. busbar component.

### DESCRIPTION OF EMBODIMENTS

The following describes the technical solutions in the embodiments of this application with reference to the accompanying drawings.

To make the objectives, technical solutions, and advantages of the embodiments of this application clearer, the following clearly describes the technical solutions in the embodiments of this application with reference to the accompanying drawings in the embodiments of this application. It is clear that the embodiments described are some rather than all embodiments of this application. Based on the embodiments in this application, all other embodiments obtained by persons of ordinary skill in the art without creative efforts fall within the protection scope of this application.

Unless otherwise defined, all technical and scientific terms used in this application have the same meanings as commonly understood by persons skilled in the technical field to which this application pertains; terms used in the specification of this application are solely for the purpose of describing specific embodiments and are not intended to limit this application; and the terms "comprise", "include", and "have", and any variations thereof in the specification, claims, and the description of the accompanying drawings of this application are intended to cover non-exclusive inclusion. In the specification, claims, and accompanying drawings of this application, the terms "first", "second", and the like are intended to distinguish between different objects rather than to describe a particular order or a primary-secondary relationship.

Reference to "embodiment" in this application means that a specific feature, structure, or characteristic described with reference to the embodiment may be included in at least one embodiment of this application. This phrase appearing in various places in the specification does not necessarily refer to the same embodiment or an independent or alternative embodiment mutually exclusive with other embodiments. It is explicitly or implicitly understood by persons skilled in the art that the embodiments described in this application may be combined with other embodiments.

In the description of this application, it should be noted that unless otherwise specified and defined explicitly, the terms "mounting", "connection", "join", and "attachment" should be understood in their general senses. For example, the terms may refer to a fixed connection, a detachable connection, or an integral connection, and may refer to a direct connection, an indirect connection via an intermediate, or an internal communication between two elements. Persons of ordinary skill in the art can understand the specific meanings of the above terms in this application based on specific circumstances.

The term "and/or" in this application merely refers to an association relationship describing associated objects, indicating that three relationships may exist. For example, A and/or B may indicate: A exists alone, A and B exist simultaneously, and B exists alone. In addition, the character "/" in this application generally indicates an "or" relationship between the contextually associated objects.

In the embodiments of this application, a same reference sign denotes a same component. For brevity, in different embodiments, detailed descriptions of a same component are not repeated. It should be understood that thicknesses, lengths, widths, and other dimensions of various components in the embodiments of this application shown in the drawings, as well as an overall thickness, length, width, and other dimensions of an integrated apparatus, are merely example descriptions and should not constitute any limitations to this application.

The term "multiple" appearing in this application refers to two or more (including two); similarly, "multiple groups" refers to two or more groups (including two groups), and "multiple pieces" refers to two or more pieces (including two pieces).

In the embodiments of this application, a battery cell may be a secondary battery, and the secondary battery refers to a battery cell that can be reused when an active material is activated through charge after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of this application.

In some implementations, the battery cell in the embodiments of this application may be a metal battery; specifically, the metal battery may include a lithium metal secondary battery, a sodium metal battery, a magnesium metal battery, or the like. This is not limited in the embodiments of this application.

The battery cell typically includes an electrode assembly. The electrode assembly includes a positive electrode, a negative electrode, and a separator. During charge and discharge of the battery cell, active ions (such as lithium ions) intercalate and de-intercalate back and forth between the positive electrode and the negative electrode. The separator is arranged between the positive electrode and the negative electrode to prevent short circuit of the positive electrode and negative electrode and to allow passage of the active ions.

In some implementations, the battery cell further includes an electrolyte. The electrolyte is used for conduction of ions between the positive electrode and the negative electrode. A type of the electrolyte is not particularly limited in this application, and can be selected based on requirements. The electrolyte may be liquid, gel, or solid.

In some implementations, the electrode assembly is provided with tabs, and the tabs can export current from the electrode assembly. The tabs include a positive tab and a negative tab.

In some implementations, the battery cell may include a housing. The housing is configured to package the electrode assembly, the electrolyte, and other components. The housing may be a steel housing, an aluminum housing, a plastic housing (for example, polypropylene), a composite metal housing (for example, copper-aluminum composite housing), an aluminum-plastic film, or the like. The housing includes a housing body and a cover.

For example, the battery cell may be a cylindrical battery cell, a prismatic battery cell, a pouch battery cell, or a battery cell of another shape. The prismatic battery cell includes a square battery cell, a blade battery cell, and a multi-prismatic battery. For example, the multi-prismatic battery is a hexagonal prismatic battery. This is not particularly limited in this application.

The battery mentioned in the embodiments of this application may include a single physical module that includes one or more battery cells for providing a higher voltage and capacity. When there are multiple battery cells, the multiple battery cells are connected in series, parallel, or a combination thereof via a busbar component.

In some embodiments, the battery may be a battery module, and when there are multiple battery cells, the multiple battery cells are arranged and fastened to form a battery module.

In some embodiments, the battery may be a battery pack, where the battery pack includes a box and a battery cell, and the battery cell or battery module is accommodated in the box.

In some embodiments, the box may be used as a part of a chassis structure of a vehicle. For example, part of the box may become at least part of the chassis of a vehicle, or part of the box may become at least a part of a cross beam and longitudinal beam of a vehicle.

The development of battery technologies needs to consider multiple design factors simultaneously, such as energy density, cycle life, discharge capacity, charge/discharge rate, and other performance parameters. In addition, production and processing efficiency of batteries need to be considered. A battery includes multiple battery cells, and the multiple battery cells are electrically connected via a busbar component. For example, an electrode terminal of the battery cell is welded to the busbar component, thereby achieving electrical connection among the multiple battery cells through the busbar component. A random welding region is used as an example. During welding, a copper clamping plate is first moved to the welding region to fix the busbar component and the electrode terminal of the welding region; then, an optimal welding position is measured using a rangefinder; after measurement, the rangefinder is moved away, and a welding device is moved to the optimal welding position to weld the electrode terminal and the busbar component in the welding region. After welding the random welding region, the above process is repeated to weld a next welding region. For a battery including multiple battery cells, welding of all welding regions takes a long time. To reduce the welding time of the battery, it is often necessary to use multiple devices to simultaneously weld multiple welding regions, which increases processing costs.

Thus, the embodiments of this application provide a welding device and a welding method capable of addressing the above issues. The welding device in this embodiment of this application includes a welding component and a measurement component. Under a condition that the welding component performs welding on a first welding region of a to-be-welded assembly at a first welding position, the measurement component measures a second welding position corresponding to a second welding region, where the second welding region is a welding region adjacent to the first welding region among multiple welding regions included in the to-be-welded assembly; and the welding component moves from the first welding position to the second welding position and performs welding on the second welding region at the second welding position. By analogy, the welding device sequentially performs measurement and welding on the multiple welding regions. In this process, while the welding component performs welding on one welding region, the measurement component simultaneously measures a welding position of an adjacent welding region. This takes less time compared with time spent in a manner of performing measurement and welding on one welding region and then performing measurement and welding on a next welding region. According to this method, duration of the entire process of welding on the multiple welding regions is shortened, and thus welding efficiency is improved.

It should be understood that the welding device in embodiments of this application can be used for welding on welding regions of a to-be-welded assembly, where the to-be-welded assembly may include any component that needs to be welded. For example, the to-be-welded assembly may include a battery cell and a busbar component included in a battery, and a welding region of the to-be-welded assembly may include a to-be-welded position between an electrode terminal of the battery cell and the busbar component. For another example, the to-be-welded assembly may further include a battery cell and an insulating component, and a welding region of the to-be-welded assembly may include a to-be-welded position between the battery cell and the insulating component. The embodiments of this application are not limited thereto.

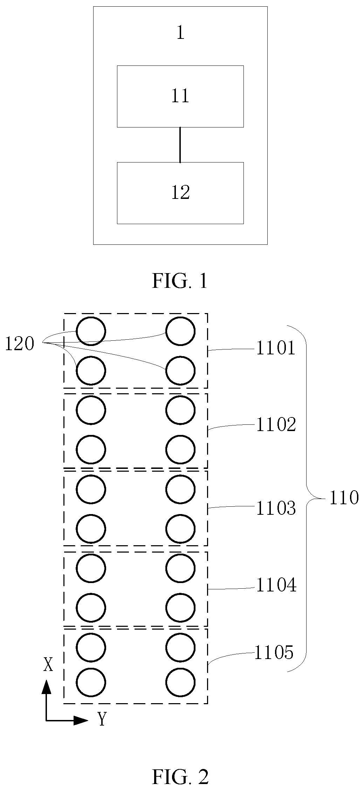

FIG. 1 shows a schematic block diagram of a welding device 1 according to an embodiment of this application. FIG. 2 shows a schematic diagram of multiple welding regions 110 included in a to-be-welded assembly 2 according to an embodiment of this application. For example, the to-be-welded assembly 2 shown in FIG. 2 can be welded with the welding device 1 shown in FIG. 1. Specifically, as shown in FIG. 1 and FIG. 2, the welding device 1 in these embodiments of this application includes: a welding component 11 configured to perform welding on a first welding region of the to-be-welded assembly 2 at a first welding position, where the to-be-welded assembly 2 includes multiple welding regions 110; and a measurement component 12 configured to measure a second welding position corresponding to a second welding region of the to-be-welded assembly 2 under a condition that the welding component 11 performs welding on the first welding region, where the second welding region is adjacent to the first welding region. The welding component 11 is further configured to: move from the first welding position to the second welding position, and perform welding on the second welding region at the second welding position.

It should be understood that each welding region 110 among the multiple welding regions 110 in these embodiments of this application may include at least one welding subregion 120, and welding on any welding region 110 among the multiple welding regions 110 with the welding component 11 may include simultaneous welding on one or more welding subregions 120 included in the welding region 110. For example, welding on the first welding region at the first welding position with the welding component 11 may include welding on at least one welding subregion 120 included in the first welding region at the first welding position with the welding component 11. For example, each welding region 110 in FIG. 2 includes four welding subregions 120. These embodiments of this application are not limited thereto.

In these embodiments of this application, the to-be-welded assembly 2 includes multiple welding regions 110, where a first welding region is any welding region among the multiple welding regions 110, and a second welding region 110 is a welding region adjacent to the first welding region among the multiple welding regions 110. Moreover, in these embodiments of this application, the first welding region being adjacent to the second welding region includes: being adjacent in welding sequence. In other words, after the welding component 11 completes welding on the first welding region, welding is performed on the second welding region next.

In some embodiments, for example, the to-be-welded assembly 2 in FIG. 2 includes any five welding regions 110, where each welding region 110 is indicated by a dashed box. In this case, the first welding region may be any of the five welding regions 110, to be specific, the first welding region may be any one among a first welding region 1101 to a fifth welding region 1105 in FIG. 2; and the second welding region may be any one among the first welding region 1101 to the fifth welding region 1105 excluding the first welding region in FIG. 2.

For example, under a condition that welding on the to-be-welded assembly 2 starts from the first welding region 1101 to the fifth welding region 1105, when a first welding region is the first welding region 1101, a second welding region is the second welding region 1102; and when the first welding region is the second welding region 1102, the second welding region is the third welding region 1103, and so forth.

For another example, under a condition that welding on the to-be-welded assembly 2 starts from the fifth welding region 1105 to the first welding region 1101, when the first welding region is the fifth welding region 1104, the second welding region is the fourth welding region 1104; and when the first welding region is the fourth welding region 1104, the second welding region is the third welding region 1103, and so forth.

For still another example, under a condition that welding needs to be performed on the first welding region 1101, the third welding region 1103, and the fifth welding region 1105, when a first welding region is the first welding region 1101, a second welding region is the third welding region 1103; and when the first welding region is the third welding region 1103, the second welding region is the fifth welding region 1105. These embodiments of this application are not limited thereto.

The first welding position of in these embodiments of this application corresponds to the first welding region, that is, the welding component 11 needs to perform welding on the first welding region at the first welding position; similarly, the second welding position corresponds to the second welding region, and the welding component 11 needs to perform welding on the second welding region at the second welding position.

It should be understood that the welding position in these embodiments of this application indicates that when the welding component 11 is at the welding position, welding can be performed in the welding region 110 corresponding to the welding position, and a better welding effect can be achieved; in other words, the welding position may represent a preferred welding position for the welding component 11 during welding. For example, when the welding component 11 performs welding on the first welding region at the first welding position, a better welding effect can be achieved; similarly, when the welding component 11 performs welding on the second welding region at the second welding position, a better welding effect can be achieved, and so forth. In this way, a welding position corresponding to each welding region 110 is determined. Laser welding is used as an example. In this case, usually, there is a specific distance from the welding component 11 to the corresponding welding region 110 for a good welding effect; in other words, based on the welding region 110, a preferred position for welding with the welding component 11 can be determined as a welding position.

In addition, under a condition that a welding region 110 includes multiple welding subregions 120, the welding position indicates that the welding component 11 can perform welding on the multiple welding subregions 120 included in the welding region 110 at the welding position, and a better welding effect can be achieved. That is, the welding position corresponding to the multiple welding subregions 120 can be determined based on the multiple welding subregions 120 included in the welding region 110.

Under a condition that the welding component 11 performs welding on the first welding region at the first welding position, the measurement component 12 measures and calculates the second welding position, so that after completing the welding on the first welding region, the welding component 11 can move from the first welding position to the second welding position to continue welding on the second welding region; and by analogy, under a condition that the welding component 11 performs welding on the second welding region at the second welding position, the measurement component 12 measures and calculates a next welding position, so that the welding component 11 can continue moving and welding until the welding device 1 sequentially completes measurement and welding on the multiple welding regions 110. In this process, while the welding component 11 performs welding on one welding region 110, the measurement component 12 simultaneously measures a welding position corresponding to another welding region 110. This takes less time compared with time spent in a manner of performing measurement and welding on one welding region 110 and then performing measurement and welding on a next welding region 110. According to this method, duration of welding on the multiple welding regions 110 is shortened, and thus welding efficiency is improved.

In these embodiments of this application, the measurement component 12 is further configured to: measure the first welding position corresponding to the first welding region, so that the welding component 11 is capable of moving to the first welding position to perform welding on the first welding region.

It should be understood that the measurement component 12 in these embodiments of this application can measure, at different positions, welding positions corresponding to different welding regions 110. For example, the measurement component 12 can measure, at a first position, the first welding position corresponding to the first welding region; and the measurement component 12 can measure, at a second position, the second welding position corresponding to the second welding region, where the first position and the second position are different. Since positions of different welding regions 110 are different, the measurement component 12 is set at different positions to measure the welding positions corresponding to the welding regions 110. This can improve measurement precision, so that welding position measurement with the measurement component 12 can be more precise, thereby improving welding efficiency.

In these embodiments of this application, the welding component 11 and the measurement component 12 move synchronously. Considering that the measurement component 12 needs to measure the welding positions corresponding to the multiple welding regions 110 at different positions, and the welding component 11 needs to move to the welding positions corresponding to the multiple welding regions 110, under the condition that the welding component 11 and the measurement component 12 are set to move synchronously, the measurement component 12 moves synchronously as the welding component 11 moves from the first welding position to the second welding position. Therefore, separate control is not required. This simplifies a structure of the welding device 1, and improves efficiency.

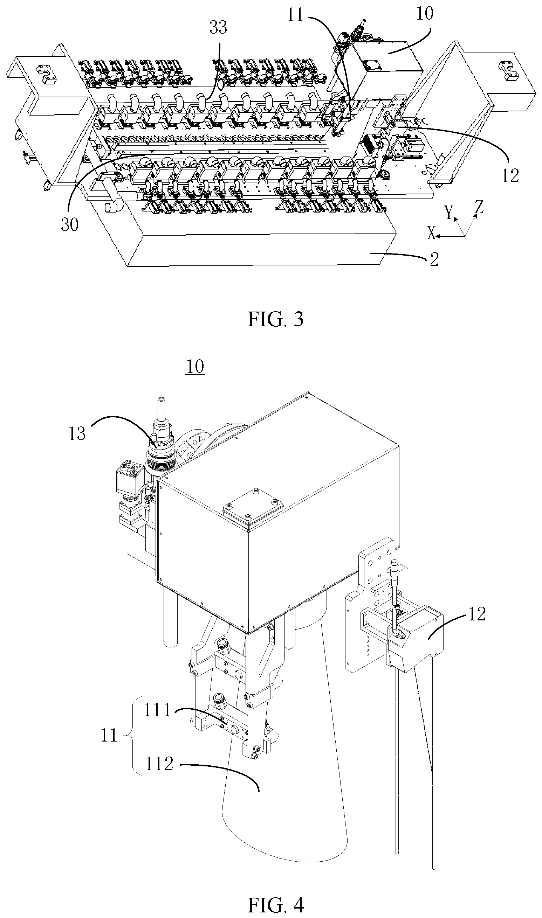

FIG. 3 shows a schematic diagram of a partial structure of the welding device 1 according to an embodiment of this application. For example, the welding device 1 shown in FIG. 3 may be a possible implementation of the welding device 1 in an embodiment of this application. FIG. 4 shows a schematic structural diagram of a welding component 11 and a measurement component 12 according to an embodiment of this application. For example, FIG. 4 shows the welding component 11 and the measurement component 12 included in the welding device 1 shown in FIG. 3.

In some embodiments, the welding device 1 includes: a motion assembly 10, where the welding component 11 and the measurement component 12 are integrated into the motion assembly 10, and the motion assembly 10 is configured to control movement of the welding component 11 and the measurement component 12. Specifically, as shown in FIG. 3 and FIG. 4, the welding component 11 and the measurement component 12 are integrated into the motion assembly 10, allowing for controlling over movement of the welding component 11 and the measurement component 12 through the motion assembly 10. For example, through the motion assembly 10, the welding component 11 and the measurement component 12 can be controlled to move separately, or the welding component 11 and the measurement component 12 can be controlled to move synchronously. Moreover, integrating the welding component 11 and the measurement component 12 into the motion assembly 10 simplifies the structure of the welding device 1, and reduces time for the welding component 11 and the measurement component 12 to avoid each other during movement. This facilitates control, and reduces manufacturing duration.

In some embodiments, the motion assembly 10 may be configured to be connected to a motion apparatus such as a robotic arm, so as to control movement of the motion assembly 10 through the robotic arm. Since the motion assembly 10 includes the welding component 11 and the measurement component 12, when the robotic arm drives the motion assembly 10 to move, the welding component 11 and the measurement component 12 move accordingly. In this way, measurement and welding of the multiple welding regions 110 with the welding component 11 and the measurement component 12 can be implemented through the robotic arm.

It should be understood that movement trajectories of the welding component 11 and the measurement component 12 in these embodiments of this application are related to the positions of the multiple welding regions 110. For example, the to-be-welded assembly 2 includes the multiple welding regions 110 arranged along a first direction X, and the motion assembly 10 is configured to control the welding component 11 and the measurement component 12 to move along the first direction X. As shown in FIG. 2 to FIG. 4, during welding of the to-be-welded assembly 2, under a condition that the to-be-welded assembly 2 includes the multiple welding regions 110 arranged along the first direction X, the welding component 11 and the measurement component 12 can be controlled through the motion assembly 10 to move along the first direction X in the arrangement order, so as to sequentially perform welding on each welding region 110 without excessive reciprocating motion or movement in other directions, resulting in short movement distances for both the welding component 11 and the measurement component 12, thereby reducing the total welding duration of the to-be-welded assembly 2 and improving welding efficiency.

In some embodiments, a distance between the welding component 11 and the measurement component 12 is related to a spacing between the multiple welding regions 110. For example, under a condition that the multiple welding regions 110 arranged along the first direction X are evenly distributed, that is, the spacings between the multiple welding regions 110 are basically equal, the distance between the welding component 11 and the measurement component 12 can be adjusted based on the spacing between two adjacent welding regions 110 among the multiple welding regions 110, so that when the welding component 11 is at the first welding position for welding on the first welding region, the measurement component 12 can be at a second position and measure, at the second position, the second welding position corresponding to the second welding region.

In these embodiments of this application, the motion assembly 10 is configured to control the welding component 11 and the measurement component 12 to approach and/or move away from the to-be-welded assembly 2. For example, when welding of the to-be-welded assembly 2 is required, the motion assembly 10 can control the welding component 11 and the measurement component 12 to approach the to-be-welded assembly 2; during the welding of the to-be-welded assembly 2, the motion assembly 10 can control the welding component 11 and the measurement component 12 to move according to the welding sequence; and after completing the welding of the to-be-welded assembly 2, the motion assembly 10 can control the welding component 11 and the measurement component 12 to move away from the to-be-welded assembly 2. The motion assembly 10 can control the movement of the welding component 11 and the measurement component 12 in various directions. The operation is simple, thereby improving welding efficiency.

It should be understood that the welding component 11 and the measurement component 12 in these embodiments of this application can be implemented in various ways.

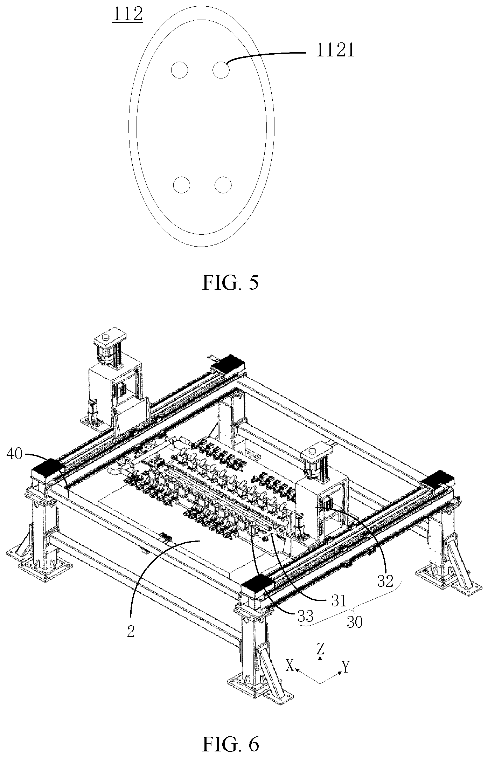

In some embodiments, to further improve welding efficiency, each welding region 110 can be set to include multiple welding subregions 120, thereby enabling simultaneous welding of the multiple welding subregions 120. FIG. 5 shows a schematic diagram of an end portion of the welding component 11 according to an embodiment of this application. As shown in FIG. 4 and FIG. 5, for example, in this embodiment of this application, the end portion of the welding component 11 is elliptical, and welding at multiple positions can be performed simultaneously at the elliptical end portion. For example, in FIG. 5, welding at four positions is performed simultaneously at the end portion.

In some embodiments, each welding region 110 among the multiple welding regions 110 includes multiple welding subregions 120; and the welding component 11 is configured to: simultaneously perform welding on the multiple welding subregions 120 included in the first welding region at the first welding position. Specifically, as shown in FIG. 2 and FIG. 5, the welding region 110 in these embodiments of this application may include the multiple welding subregions 120. Correspondingly, one end of the welding component 11 is provided with multiple welding positions 1121 in one-to-one correspondence with the multiple welding subregions 120. In this way, the welding component 11 can simultaneously perform welding on the multiple welding subregions 120, reducing total welding duration of the to-be-welded assembly 2, and thereby improving the efficiency of welding of the to-be-welded assembly 2.

It should be understood that the welding component 11 in these embodiments of this application can be implemented through various welding mechanisms. For example, the welding component 11 includes a galvanometer laser welding machine capable of controlling a direction of laser through a galvanometer, to perform welding on the welding subregions 120 of the welding region 110. In this way, welding is fast, precise, and time-saving.

In some embodiments, the welding component 11 may include an air knife 111 and a welding structure 112, where the welding structure 112 is configured to perform welding operations. For example, the welding structure 112 may include multiple welding positions 1121 for welding of welding subregions 120 of each welding region 110. In FIG. 5, for example, the welding structure 112 may include four welding positions 1121 for welding of four welding subregions 120 included in each welding region 110; and the air knife 111 may be used to handle impurities such as dust generated due to welding operations of the welding structure 112. In some embodiments, the welding component 11 may include a laser connection component 13, where the laser connection component 13 is configured to be connected to laser for performing laser welding with laser.

It should be understood that the measurement component 12 in these embodiments of this application can be implemented in various ways. For example, the measurement component 12 may include a laser rangefinder that performs ranging by emitting laser signals and measuring the returned laser signals. For another example, the measurement component 12 may include an ultrasonic rangefinder. These embodiments of this application are not limited thereto.

In these embodiments of this application, the welding device 1 further includes: a clamping plate assembly 30, where the clamping plate assembly 30 is located on a side of the to-be-welded assembly 2 facing the welding component 11 and the measurement component 12; the clamping plate assembly 30 is configured to fix the multiple welding regions 110 of the to-be-welded assembly 2, so as to determine the positions of the multiple welding regions 110; and the clamping plate assembly 30 may also be configured to fasten the to-be-welded assembly 2, so that the multiple welding regions 110 of the to-be-welded assembly 2 are less prone to movement or misalignment during welding, improving the measurement precision of the measurement component 12 and the welding precision of the welding component 11, and thereby improving the welding efficiency.

The clamping plate assembly 30 in these embodiments of this application is located on the side of the to-be-welded assembly 2 facing the welding component 11 and the measurement component 12, facilitating the fixing and fastening of the multiple welding regions 110 by the clamping plate assembly 30.

In addition, the welding component 11 and the measurement component 12 are located on a side of the clamping plate assembly 30 away from the to-be-welded assembly 2, that is, the clamping plate assembly 30 is located between the to-be-welded assembly 2 and the welding component 11, in other words, between the to-be-welded assembly 2 and the measurement component 12. In this way, before welding, the clamping plate assembly 30 may be moved to the positions of the multiple welding regions 110 of the to-be-welded assembly 2 to fasten and fix the multiple welding regions 110; then, the measurement component 12 and the welding component 11 may move on the side of the clamping plate assembly 30 away from the to-be-welded assembly 2 to perform measurement and welding operations; and after completing welding, the measurement component 12 and the welding component 11 are moved away, and then the clamping plate assembly 30 may be moved. The operation is simple, and can be easily controlled.

In some embodiments, the clamping plate assembly 30 includes: a clamping plate 31, where the clamping plate 31 is provided with multiple through holes 311, and the clamping plate 31 is configured to fix the multiple through holes 311 and the multiple welding regions 110, so that the welding component 11 performs welding on the multiple welding regions 110 through the multiple through holes 311; and a control component 32, configured to control the clamping plate 31 to approach and/or move away from the to-be-welded assembly 2. Specifically, the multiple through holes 311 provided on the clamping plate 31 may be used to expose the multiple welding regions 110. For example, each through hole 311 may correspond to one or more welding regions 110, or may correspond to one or more welding subregions 120 included in one welding region 110. For example, in these embodiments of this application, each through hole 311 corresponds to one welding subregion 120, so that each welding subregion 120 can be exposed through the through hole 311. In this way, the control component 32 can control the clamping plate 31 to approach the to-be-welded assembly 2 and fix the multiple welding regions 110, facilitating welding of the multiple welding regions 110 with the welding component 11. After welding is completed, the control component 32 can further control the clamping plate 31 to move away from the to-be-welded assembly 2 for welding of other to-be-welded assemblies 2.

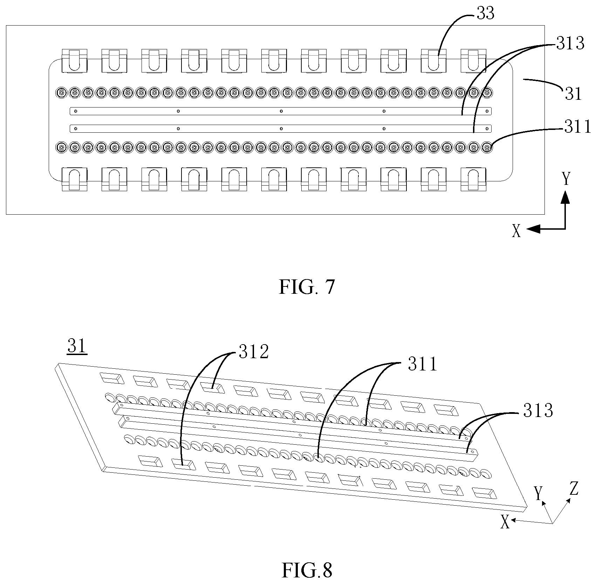

FIG. 6 shows a schematic diagram of another partial structure of the welding device 1 according to an embodiment of this application. For example, FIG. 6 may be a schematic diagram of another partial structure of the welding device 1 shown in FIG. 3, where FIG. 6 does not show the welding component 11 and the measurement component 12 included in the welding device 1 shown in FIG. 3. FIG. 7 shows a schematic diagram of a partial structure of the clamping plate assembly 30 according to an embodiment of this application. For example, FIG. 7 is a top view schematic diagram of a partial structure of the clamping plate assembly 2 shown in FIG. 6. FIG. 8 shows a schematic structural diagram of the clamping plate 31 according to an embodiment of this application. For example, FIG. 8 may be a schematic structural diagram of the clamping plate 31 included in the clamping plate assembly 2 shown in FIG. 6 and FIG. 7.

As shown in FIG. 6 to FIG. 8, in these embodiments of this application, for example, each through hole 311 corresponds to one welding subregion 120, so that each welding subregion 120 is exposed through the through hole 311, and the welding component 11 performs welding on each welding subregion 120 through the through hole 311. The control component 32 in these embodiments of this application may be configured to control movement of the clamping plate 31. For example, the control component 32 can control the clamping plate 31 to move along a second direction Y and/or along a third direction Z. The second direction Y, the third direction X, and the first direction X are perpendicular to each other, and the first direction X is the arrangement direction of the multiple welding regions 110. These embodiments of this application are not limited thereto.

It should be understood that a shape and size of the through hole 311 in these embodiments of this application may be set according to practical applications. For example, a cross-sectional shape of the through hole 311 may be circular or rectangular for ease of processing. For another example, the shape of the through hole 311 may correspond to a welding nozzle located between the clamping plate 31 and the to-be-welded assembly 2, and for example, may be consistent with a shape of the welding nozzle, so that the welding component 11 can perform welding on the to-be-welded assembly 2 through the through hole 311 and the welding nozzle.

In some embodiments, the clamping plate assembly 30 further includes: a dust collection component 33, where the dust collection component is configured to collect dust generated due to welding on the multiple welding regions 110, so as to reduce impact on welding caused by dust and other impurities generated during welding, improving welding efficiency and welding strength. As shown in FIG. 6 to FIG. 8, the dust collection component 33 may include a dust collection pipeline; the dust collection pipeline may be connected to the welding nozzle; and the welding nozzle may be located between the through hole 311 of the clamping plate 31 and the welding region 110 of the to-be-welded assembly 2. In this way, during welding, dust generated at the welding nozzle can be quickly absorbed and collected uniformly through the dust collection pipeline, reducing the impact of dust on welding.

In some embodiments, as shown in FIG. 6 to FIG. 8, the clamping plate 31 may further include a mounting structure 312, where the mounting structure 312 is configured for mounting and fastening of the dust collection component 33. For example, the mounting structure 312 may include a mounting hole, where the mounting hole is configured for mounting and fastening of a partial structure of the dust collection pipeline of the dust collection component 33.

In some embodiments, when the welding component 11 performs welding on any welding region 110 among the multiple welding regions 110, all dust collection pipelines included in the dust collection component 33 may be open, to simplify the structure of the dust collection component 33 for ease of control; alternatively, only a dust collection pipeline corresponding to the welding region 110 included in the dust collection component 33 may be opened, while other dust collection pipelines may be closed to lower power consumption. These embodiments of this application are not limited thereto.

In some embodiments, as shown in FIG. 6 to FIG. 8, the clamping plate 31 may further include a blocking structure 313, where the blocking structure 313 may be located between the multiple through holes 311 to reduce impact between the multiple welding subregions 120 and to reduce impact between the multiple welding regions 110. For example, the blocking structure 313 may be a protruding structure of the clamping plate 31. For another example, when the measurement component 12 uses laser signals for ranging, the blocking structure 313 can be used to block interference on the laser signals. For still another example, when the welding component 11 uses a laser welding technology for welding, the blocking structure 313 can also be used to block interference on laser signals. These embodiments of this application are not limited thereto.

In embodiments of this application, the welding device 1 further includes: a bracket 40, where the bracket 40 is configured to fasten the to-be-welded assembly 2. As shown in FIG. 6 to FIG. 8, the bracket 40 may be used to fasten the to-be-welded assembly 2 to alleviate misalignment of the to-be-welded assembly 2 during welding; and after welding of the to-be-welded assembly 2 completes, the to-be-welded assembly 2 is separated from the bracket 40. In addition, the bracket 40 may further be used for mounting the clamping plate assembly 30, and the clamping plate assembly 30 can move relative to the bracket 40, so as to fix the multiple welding regions 110 of the to-be-welded assembly 2.

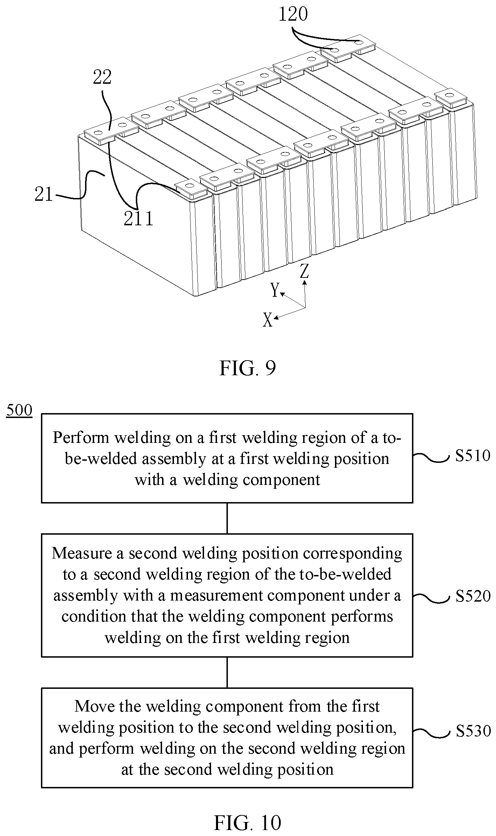

It should be understood that the to-be-welded assembly 2 in these embodiments of this application may include any component that needs to be welded. For example, FIG. 9 shows a schematic structural diagram of the multiple battery cells 21 according to an embodiment of this application.

In some embodiments, the to-be-welded assembly 2 includes a busbar component 22 and the multiple battery cells 21, where the busbar component 22 is configured to be electrically connected to electrode terminals 211 of the multiple battery cells 21, and the multiple welding regions 110 include a welding region between the busbar component 22 and the electrode terminal 211. Specifically, the busbar component 22 can achieve electrical connection among the multiple battery cells 21 by connecting to the electrode terminals 211 of the battery cells 21. Further, the busbar component 22 can be fixed to the electrode terminals 211 of the battery cells 21 through welding; thus, the welding device 1 can weld the busbar component 22 to the multiple electrode terminals 211, improving the efficiency of welding between the busbar component 22 and the electrode terminals 211, and thereby enhancing the processing efficiency of the battery cells 21.

The electrode terminal 211 in these embodiments of this application is configured to be electrically connected to an electrode assembly inside the battery cell 21 to output electrical energy of the battery cell 21. The battery cell 21 may include at least two electrode terminals 211, where the at least two electrode terminals 211 may include at least one positive electrode terminal and at least one negative electrode terminal, the positive electrode terminal is configured to be electrically connected to a positive tab of the electrode assembly, and the negative electrode terminal is configured to be electrically connected to a negative tab of the electrode assembly. The positive electrode terminal and the positive tab may be directly connected or indirectly connected, and the negative electrode terminal and the negative tab may be directly connected or indirectly connected. Exemplarily, the positive electrode terminal may be electrically connected to the positive tab through a connecting component, and the negative electrode terminal may be electrically connected to the negative tab through a connecting component.

It should be understood that the multiple electrode terminals 211 included in the battery cell 21 in these embodiments of this application may be located on a same wall or on different walls. For example, in FIG. 9, an example in which the battery cell 21 includes two electrode terminals 211 is mainly used, and the two electrode terminals 211 are located on the same wall. These embodiments of this application are not limited thereto.

The battery cell 21 of these embodiments of this application may be processed and assembled into a battery. Specifically, to meet different power usage requirements, the battery may include multiple battery cells 21, where the multiple battery cells 21 may be connected in series, parallel, or a combination thereof. The combination refers to a mix of series and parallel connections. The battery may also be referred to as a battery pack. Optionally, the multiple battery cells 21 may first be connected in series, parallel, or a combination thereof to form a battery module, and multiple battery modules may then be connected in series, parallel, or a combination thereof to form a battery. That is, the multiple battery cells 21 may directly form a battery, or may first form a battery module and then battery modules form a battery.

The technical solutions described in these embodiments of this application are applicable to various electric devices using batteries.

The electric device may be a vehicle, a mobile phone, a portable device, a notebook computer, a ship, a spacecraft, an electric toy, an electric tool, or the like. The vehicle may be a fuel vehicle, a gas vehicle, or a new energy vehicle, where the new energy vehicle may be a battery electric vehicle, a hybrid vehicle, or an extended-range vehicle; the spacecraft includes an airplane, a rocket, a space shuttle, a spaceship, or the like; the electric toy includes a stationary or mobile electric toy, such as a game console, an electric car toy, an electric ship toy, an electric airplane toy, or the like; the electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, or an electric plane. The foregoing electric device is not particularly limited in these embodiments of this application.

In some embodiments, the to-be-welded assembly 2 includes multiple battery cells 21 arranged along the first direction X, the multiple battery cells 21 include two electrode terminals 211 arranged along the second direction Y, the first direction X is perpendicular to the second direction Y, and each welding region 110 among the multiple welding regions 110 includes a welding region between at least one electrode terminal 211 of the battery cell 21 and the busbar component 22. As shown in FIG. 9, for the multiple battery cells 21 arranged along the first direction X, each battery cell 21 may include multiple electrode terminals 211. For example, each battery cell 21 includes two electrode terminals 211 located on a same wall herein; and each welding region 110 may include a welding region between one or more electrode terminals 211 of the battery cell 21 and the busbar component 22. To be specific, electrode terminals 211 of a same battery cell 21 correspond to a same welding region 110, and then the multiple electrode terminals 211 included in the same battery cell 21 and the corresponding busbar component 22 can be welded simultaneously with the welding component 11, thereby improving welding efficiency to improve efficiency of welding the multiple battery cells 21 and the busbar component 22.

For example, as shown in FIG. 9, the welding region between each electrode terminal 211 and the corresponding busbar component 22 may correspond to one welding subregion 120. For example, each welding region 110 includes four welding subregions 120. In this case, each welding region 110 corresponds to the electrode terminals 211 included in two battery cells 21; that is, the welding component 11 can perform welding on the electrode terminals 211 included in two battery cells 21 at one welding position, improving the welding speed and thereby enhancing efficiency of processing the battery cell 21.

The welding device 1 of these embodiments of this application is described in detail above with reference to the accompanying drawings. A welding method according to an embodiment of this application is described below, and for parts not described in detail, refer to the foregoing embodiments.

FIG. 10 shows a schematic flowchart of a welding method 500 according to an embodiment of this application. The method 500 may be implemented by a welding device 1. As shown in FIG. 10, the method 500 may include: S510: perform welding on a first welding region of a to-be-welded assembly 2 at a first welding position with a welding component 11, where the to-be-welded assembly 2 includes multiple welding regions 110; S520: measure a second welding position corresponding to a second welding region of the to-be-welded assembly 2 with a measurement component 12 under a condition that the welding component 11 performs welding on the first welding region, where the second welding region is adjacent to the first welding region; and S530: move the welding component 11 from the first welding position to the second welding position, and perform welding on the second welding region at the second welding position.

In some embodiments, the welding component 11 and the measurement component 12 move synchronously.

In some embodiments, the method 500 further includes: control the welding component 11 and the measurement component 12 to approach and/or move away from the to-be-welded assembly 2.

In some embodiments, each welding region 110 among the multiple welding regions 110 includes multiple welding subregions 120; and the performing welding on a first welding region at a first welding position with a welding component 11 includes: welding is simultaneously performed in the multiple welding subregions 120 included in the first welding region at the first welding position with the welding component 11.

In some embodiments, the method 500 further includes: fix the multiple welding regions 110 of the to-be-welded assembly 2 with a clamping plate assembly 30, where the clamping plate assembly 30 is located on a side of the to-be-welded assembly 2 facing the welding component 11 and the measurement component 12.

In some embodiments, the to-be-welded assembly 2 includes a busbar component 22 and multiple battery cells 21, the busbar component 22 is configured to be electrically connected to electrode terminals 211 of the multiple battery cells 21, and the multiple welding regions 110 include a welding region between the busbar component 22 and the electrode terminal 211.

In some embodiments, the to-be-welded assembly 2 includes the multiple battery cells 21 arranged along the first direction X, the multiple battery cells 21 include two electrode terminals 211 arranged along a second direction Y, the first direction X is perpendicular to the second direction Y, each welding region 110 among the multiple welding regions 110 includes a welding region between at least one electrode terminal 211 of the battery cell 21 and the busbar component 22.

It should be understood that the welding method 500 of this embodiment of this application can be implemented by the welding device 1 described above. For brevity, details are not repeated herein.

Thus, for the welding device 1 and the welding method 500 of these embodiments of this application, under a condition that the welding component 11 performs welding on the first welding region at the first welding position, the measurement component 12 can measure and calculate a second welding position, so that after completing the welding of the first welding region, the welding component 11 can move from the first welding position to a second welding position to continue welding on a second welding region; and by analogy, under a condition that the welding component 11 performs welding on the second welding region at the second welding position, the measurement component 12 measures and calculates a next welding position, so that the welding component 11 can continue moving and welding until the welding device 1 sequentially completes measurement and welding on the multiple welding regions 110.

In this process, while the welding component 11 performs welding on one welding region 110, the measurement component 12 simultaneously measures a welding position corresponding to another welding region 110. This takes less time compared with time spent in a manner of performing measurement and welding on one welding region 110 and then performing measurement and welding on a next welding region 110. According to this method, duration of welding on the multiple welding regions 110 is shortened, and thus welding efficiency is improved.

Although this application is described with reference to preferred embodiments, various improvements can be made thereto and components therein can be replaced with equivalents without departing from the scope of this application. In particular, as long as no structural conflict exists, the technical features mentioned in various embodiments can be combined in any manner. This application is not limited to the specific embodiments disclosed in this specification but includes all technical solutions falling within the scope of the claims.

## Claims

1. A welding device, **characterized by** comprising:
a welding component, configured to perform welding on a first welding region of a to-be-welded assembly at a first welding position, wherein the to-be-welded assembly comprises multiple welding regions; and
a measurement component, configured to measure a second welding position corresponding to a second welding region of the to-be-welded assembly under a condition that the welding component performs welding on the first welding region, wherein the second welding region is adjacent to the first welding region;
wherein the welding component is further configured to: move from the first welding position to the second welding position, and perform welding on the second welding region at the second welding position.

2. The welding device according to claim 1, **characterized in that** the welding component and the measurement component move synchronously.

3. The welding device according to claim 1 or 2, **characterized in that** the welding device comprises:
a motion assembly, wherein the welding component and the measurement component are integrated into the motion assembly, and the motion assembly is configured to control movement of the welding component and the measurement component.

4. The welding device according to claim 3, **characterized in that** the to-be-welded assembly comprises the multiple welding regions arranged along a first direction, and the motion assembly is configured to control the welding component and the measurement component to move along the first direction.

5. The welding device according to claim 3 or 4, **characterized in that** the motion assembly is configured to control the welding component and the measurement component to approach and/or move away from the to-be-welded assembly.

6. The welding device according to any one of claims 1 to 5, **characterized in that** each welding region among the multiple welding regions comprises multiple welding subregions; and
the welding component is configured to:
simultaneously perform welding on the multiple welding subregions comprised in the first welding region at the first welding position.

7. The welding device according to any one of claims 1 to 6, **characterized in that** the welding device further comprises:
a clamping plate assembly, wherein the clamping plate assembly is located on a side of the to-be-welded assembly facing the welding component and the measurement component, and the clamping plate assembly is configured to fix the multiple welding regions of the to-be-welded assembly.

8. The welding device according to claim 7, **characterized in that** the welding component and the measurement component are located on a side of the clamping plate assembly away from the to-be-welded assembly.

9. The welding device according to claim 7 or 8, **characterized in that** the clamping plate assembly comprises:
a clamping plate, wherein the clamping plate is provided with multiple through holes, and the clamping plate is configured to fix the multiple through holes and the multiple welding regions, so that the welding component performs welding on the multiple welding regions through the multiple through holes; and
a control component, configured to control the clamping plate to approach and/or move away from the to-be-welded assembly.

10. The welding device according to any one of claims 7 to 9, **characterized in that** the clamping plate assembly further comprises:
a dust collection component, wherein the dust collection component is configured to collect dust generated due to welding on the multiple welding regions.

11. The welding device according to any one of claims 1 to 10, **characterized in that** the to-be-welded assembly comprises a busbar component and multiple battery cells, the busbar component is configured to be electrically connected to electrode terminals of the multiple battery cells, and the multiple welding regions comprise a welding region between the busbar component and the electrode terminal.

12. The welding device according to claim 11, **characterized in that** the to-be-welded assembly comprises multiple battery cells arranged along the first direction, the multiple battery cells comprise two electrode terminals arranged along a second direction, the first direction is perpendicular to the second direction, and each welding region among the multiple welding regions comprises a welding region between at least one electrode terminal of the battery cell and the busbar component.

13. The welding device according to any one of claims 1 to 12, **characterized in that** the welding component comprises a galvanometer laser welding machine.

14. A welding method, **characterized by** comprising:
performing welding on a first welding region of a to-be-welded assembly at a first welding position with a welding component, wherein the to-be-welded assembly comprises multiple welding regions;
measuring a second welding position corresponding to a second welding region of the to-be-welded assembly with a measurement component under a condition that the welding component performs welding on the first welding region, wherein the second welding region is adjacent to the first welding region; and
moving the welding component from the first welding position to the second welding position, and performing welding on the second welding region at the second welding position.

15. The welding method according to claim 14, **characterized in that** the welding component and the measurement component move synchronously.

16. The welding method according to claim 14 or 15, **characterized in that** the method further comprises:
controlling the welding component and the measurement component to approach and/or move away from the to-be-welded assembly.

17. The welding method according to any one of claims 14 to 16, **characterized in that** each welding region among the multiple welding regions comprises multiple welding subregions; and
the performing welding on a first welding region at a first welding position with a welding component comprises:
performing welding simultaneously on the multiple welding subregions comprised in the first welding region at the first welding position with the welding component.

18. The welding method according to any one of claims 14 to 17, **characterized in that** the method further comprises:
fixing the multiple welding regions of the to-be-welded assembly with a clamping plate assembly, wherein the clamping plate assembly is located on a side of the to-be-welded assembly facing the welding component and the measurement component.

19. The welding method according to any one of claims 14 to 18, **characterized in that** the to-be-welded assembly comprises a busbar component and multiple battery cells, the busbar component is configured to be electrically connected to electrode terminals of the multiple battery cells, and the multiple welding regions comprise a welding region between the busbar component and the electrode terminal.

20. The welding method according to claim 19, **characterized in that** the to-be-welded assembly comprises multiple battery cells arranged along a first direction, the multiple battery cells comprise two electrode terminals arranged along a second direction, the first direction is perpendicular to the second direction, and each welding region among the multiple welding regions comprises a welding region between at least one electrode terminal of the battery cell and the busbar component.
